# FASCICULE DE BREVET EUROPEEN

(11) **EP 2 805 887 B1**
(45) Date de publication et mention de la délivrance du brevet: **01.02.2017**
(21) Numéro de dépôt: 14169097.4
(22) Date de dépôt: 20.05.2014
(51) Int. Cl.: B64D 31/04, B64C 13/04, G05G 9/04, B64D 31/06, B64C 13/16, B64C 19/00

(54) **Système et procédé de commande d'un aéronef**
System und Verfahren zur Steuerung eines Luftfahrzeuges
System and method for commanding an aircaft

(30) Priorité: 23.05.2013 FR 1354656
(43) Date de publication de la demande: 26.11.2014
(73) Titulaire: AIRBUS OPERATIONS (S.A.S), 31060 Toulouse (FR)
(72) Inventeur: Scacchi, Pierre, 31300 TOULOUSE (FR); Constans, Florian, 31820 PIBRAC (FR); Boada-Bauxell, Josep, 31300 Toulouse (FR)
(74) Mandataire: Sarraméa, Claude

(56) Documents cités:
- GB-A- 2 482 408
- US-A- 5 868 359
- US-A1- 2003 176 256
- US-A1- 2009 187 292

## Description

La présente invention concerne un système et un procédé de commande d'un paramètre de contrôle d'un aéronef. Les aéronefs modernes, en particulier les avions de transport, comportent des interfaces permettant à un pilote de commander certains paramètres de contrôle de l'aéronef, tels que la poussée des moteurs ou les angles de roulis ou de tangage. Ainsi, une manette est prévue pour le contrôle de la poussée des moteurs ; un manche ou un mini manche est prévu pour le contrôle latéral (angle de roulis) et longitudinal (angle de tangage) de l'aéronef. Il existe typiquement deux types de manettes pour le contrôle de la poussée des moteurs. Un premier type correspond à une manette motorisée dont la position peut être contrôlée manuellement par un pilote de l'aéronef en pilotage manuel ; la position de la manette peut aussi être contrôlée par un servomoteur dans un mode de commande automatique de la manette de poussée (« autothrottle » en anglais). L'intérêt d'une telle manette réside dans le fait que la position de la manette correspond toujours à la poussée commandée des moteurs de l'aéronef, que ce soit en mode de commande manuel ou en mode de commande automatique. Toutefois, la présence d'un servomoteur rend la manette complexe, ce qui peut l'exposer à des dysfonctionnements. Il est donc nécessaire de mettre en place des mécanismes de débrayage ou de surpassement, ainsi que des redondances afin de garantir les objectifs de disponibilité et de sécurité requis. Un deuxième type correspond à un contrôle automatique de la poussée (« autothrust » en anglais) : la position de la manette peut uniquement être contrôlée manuellement par un pilote de l'aéronef. La position d'une telle manette n'est donc représentative de la poussée des moteurs de l'aéronef qu'en mode de pilotage manuel. Dans un mode de commande automatique de la poussée, la position d'une telle manette n'est pas représentative de la poussée des moteurs. Une telle manette n'est pas complexe et présente donc un niveau élevé de fiabilité. Toutefois, un pilote peut être amené à devoir ajuster la position de la manette lors d'une transition entre un mode de commande automatique de la poussée et un mode de commande manuel de la poussée afin d'éviter des transitoires brusques du niveau de poussée des moteurs de l'aéronef, lesquels pourraient avoir des conséquences sur le confort des passagers. Par ailleurs, une manette est généralement associée à chacun des moteurs de l'aéronef. Un pilote de l'aéronef doit donc manipuler autant de manettes que l'aéronef comporte de moteurs.

Le document US2009/187292A1 décrit un système de commande d'un paramètre de contrôle d'un aéronef. Il est considéré comme l'art antérieur le plus proche et décrit les caractéristiques du préambule de la revendication 1.

La présente invention a pour objet de remédier aux inconvénients précités. Elle concerne un système de commande d'un paramètre de contrôle d'un aéronef, ledit système de commande comprenant une interface de commande, laquelle comporte :
- un élément mobile configuré pour se déplacer selon une course, ladite course définissant au moins deux portions de course séparées par une position neutre ;
- un élément de rappel configuré pour ramener l'élément mobile à ladite position neutre lorsque ledit élément mobile n'est pas actionné ; et
- un élément d'interaction.

Ce système de commande comprend également une unité de contrôle configurée pour :
- mémoriser une information correspondant à une première position de l'élément mobile à un instant d'activation de l'élément d'interaction ; et
- générer une consigne dudit paramètre de contrôle de l'aéronef.

Le système est remarquable en ce que ladite consigne est générée en fonction d'une commande associée à :
- ladite première position de l'élément mobile pour laquelle ladite information a été mémorisée audit instant d'activation de l'élément d'interaction ; ou
- une position courante de l'élément mobile, lorsque cette position courante et la première position sont situées sur la même portion de course et cette position courante est plus éloignée de la position neutre que la première position n'est éloignée de la position neutre.

Ce système permet donc un retour automatique de l'élément mobile à la position neutre lorsque l'élément mobile n'est pas manipulé par un opérateur, tout en continuant à fournir une consigne du paramètre de contrôle de l'aéronef, ladite consigne correspondant alors à la première position de l'élément mobile pour laquelle ladite information a été mémorisée lors de l'activation de l'élément d'interaction. Ainsi, en dehors d'une manipulation par un membre d'équipage, l'élément mobile est toujours à la position neutre. Par conséquent, cette position neutre de l'élément mobile reste cohérente avec une valeur courante de commande du paramètre de contrôle de l'aéronef, même dans un mode de commande automatique du paramètre de contrôle de l'aéronef, sans qu'il soit nécessaire de prévoir un servomoteur pour déplacer l'élément mobile.

Dans un mode particulier de réalisation, ledit paramètre de contrôle est homogène à la dérivée de l'énergie de l'aéronef. Cela permet de commander une variation de l'énergie de l'aéronef et donc l'énergie de l'aéronef. Cette variation de l'énergie peut correspondre à une augmentation ou à une diminution de l'énergie de l'aéronef. Le fait de commander une augmentation de l'énergie de l'aéronef plutôt que la poussée individuelle de chacun des moteurs présente l'avantage de simplifier le pilotage de l'aéronef puisqu'il n'est pas nécessaire d'actionner une manette pour chacun des moteurs, mais seulement ledit élément mobile. De plus, il est également possible de commander, avec ce seul élément mobile, des actionneurs permettant de diminuer l'énergie de l'aéronef, tels que des aérofreins ou des freins.

De façon avantageuse, lesdites au moins deux portions de course sont associées à au moins deux combinaisons d'actionneurs agissant sur l'énergie de l'aéronef. Un système conforme à ce mode particulier de réalisation permet donc de commander plusieurs actionneurs simultanément, avec seulement ledit élément mobile.

De préférence, le système de commande comporte en outre un dispositif d'affichage et l'unité de contrôle est configurée pour commander l'affichage, sur ce dispositif d'affichage, d'au moins une première indication correspondant à la position courante de l'élément mobile et d'une deuxième indication correspondant à la première position de l'élément mobile. De façon avantageuse, l'unité de contrôle est configurée pour commander, en outre, l'affichage sur le dispositif d'affichage d'une troisième indication correspondant à une valeur courante du paramètre de contrôle de l'aéronef, cette troisième indication étant affichée relativement aux dites première et deuxième indications. Cela permet de fournir, à un pilote de l'aéronef, des informations permettant d'améliorer sa conscience de la situation : le pilote peut ainsi savoir si la consigne du paramètre de contrôle, générée par le système, correspond à la position courante ou à la première position. Il peut ainsi déterminer plus facilement quelles actions il doit réaliser.

Avantageusement, l'information mémorisée correspondant à la première position de l'élément mobile à un instant d'activation de l'élément d'interaction est :
- une valeur représentant ladite première position ; ou
- une valeur de consigne du paramètre de contrôle de l'aéronef générée en fonction d'une commande associée à ladite première position de l'élément mobile.

Dans un mode de réalisation, l'élément d'interaction peut en outre être configuré pour bloquer en position l'élément mobile.

L'invention concerne également un système de pilotage d'un aéronef comportant un dispositif de pilotage automatique de l'aéronef ainsi qu'un système de commande tel que précité, ledit système de pilotage pouvant être configuré au moins selon :
- un premier mode dans lequel le système de pilotage commande ledit paramètre de contrôle de l'aéronef en fonction de la consigne générée par le système de commande ; et
- un deuxième mode dans lequel le système de pilotage commande ledit paramètre de contrôle de l'aéronef au moins en fonction d'une consigne générée par le dispositif de pilotage automatique.

De façon préférée, lorsque le deuxième mode est activé, le système de pilotage commande le paramètre de contrôle de l'aéronef en fonction de la consigne générée par le système de commande lorsque celle-ci a une amplitude supérieure à l'amplitude de la consigne générée par le dispositif de pilotage automatique et que ces deux consignes sont de même signe.

Cela permet au pilote de surpasser une commande issue du dispositif de pilotage automatique : le dispositif de pilotage automatique génère ainsi une consigne correspondant à une amplitude minimale utilisée pour le contrôle de l'aéronef ; si le pilote agit sur le système de commande de telle façon que celui-ci génère une consigne de même signe et d'amplitude supérieure à l'amplitude de la consigne générée par le dispositif de pilotage automatique, alors la consigne générée par le système de commande est utilisée pour le contrôle de l'aéronef.

L'invention concerne aussi un aéronef comportant un système de commande tel que précité.

L'invention concerne aussi un aéronef comportant un système de pilotage tel que précité.

L'invention est aussi relative à un procédé de commande d'un paramètre d'un aéronef, comportant une étape de détermination d'une position courante d'un élément mobile d'une interface de commande, ledit élément mobile étant configuré pour se déplacer selon une course, ladite course définissant au moins deux portions de course séparées par une position neutre et l'élément mobile étant ramené à ladite position neutre par un élément de rappel lorsqu'il n'est pas actionné. Ce procédé comporte en outre les étapes suivantes :
- mémorisation, par une unité de contrôle, d'une information correspondant à une première position de l'élément mobile lors de l'activation d'un élément d'interaction de l'interface de commande ;
- génération, par l'unité de contrôle, d'une consigne dudit paramètre de contrôle de l'aéronef.

Le procédé est remarquable en ce que ladite consigne est générée en fonction d'une commande associée :
- à ladite première position de l'élément mobile pour laquelle ladite information a été mémorisée lors de l'activation de l'élément d'interaction ; ou
- à une position courante de l'élément mobile, lorsque cette position courante et la première position sont situées sur la même portion de course et cette position courante est plus éloignée de la position neutre que la première position n'est éloignée de la position neutre.

Dans un mode particulier de réalisation, ledit paramètre de contrôle est homogène à la dérivée de l'énergie de l'aéronef et lesdites au moins deux portions de course sont associées à au moins deux combinaisons d'actionneurs agissant sur l'énergie de l'aéronef.

De préférence, l'unité de contrôle est configurée pour commander l'affichage, sur un dispositif d'affichage, d'au moins une première indication correspondant à la position courante de l'élément mobile et d'une deuxième indication correspondant à la première position de l'élément mobile. Avantageusement, l'unité de contrôle est configurée pour commander, en outre, l'affichage sur le dispositif d'affichage d'une troisième indication correspondant à une valeur courante du paramètre de contrôle de l'aéronef, cette troisième indication étant affichée relativement aux dites première et deuxième indications.

L'invention concerne également un procédé de pilotage d'un aéronef, ledit aéronef comportant un dispositif de pilotage automatique ainsi qu'un système de commande tel que précité, ledit système de pilotage pouvant être configuré au moins selon :
- un premier mode dans lequel le système de pilotage commande ledit paramètre de contrôle de l'aéronef en fonction de la consigne générée par le système de commande ; et
- un deuxième mode dans lequel le système de pilotage commande ledit paramètre de contrôle de l'aéronef au moins en fonction d'une consigne générée par le dispositif de pilotage automatique.

Ce procédé comporte les étapes suivantes lorsque le deuxième mode du système de pilotage est activé :
- génération, par le système de commande, d'une consigne de commande du paramètre de contrôle de l'aéronef, conformément au procédé précité ;
- commande, par le système de pilotage, du paramètre de contrôle de l'aéronef en fonction :
   - de la consigne générée par le système de commande lorsque celle-ci a une amplitude supérieure à l'amplitude de la consigne générée par le dispositif de pilotage automatique et que ces deux consignes sont de même signe ; ou
   - de la consigne générée par le dispositif de pilotage automatique dans les autres cas.

L'invention est encore relative à un programme d'ordinateur comportant des instructions pour la mise en oeuvre d'un procédé tel que précité.

L'invention sera mieux comprise à la lecture de la description qui suit et à l'examen des figures annexées.

La figure 1 représente, en schéma synoptique, un système de pilotage d'un aéronef conforme à un mode de réalisation de l'invention.

La figure 2 représente, de façon schématique, un exemple d'interface de commande conforme à un mode de réalisation de l'invention.

Les figures 3a, 3b, 3c, 3d, 3e, 3f et 4 représentent des exemples d'affichage sur un écran d'un aéronef selon un mode particulier de réalisation de l'invention.

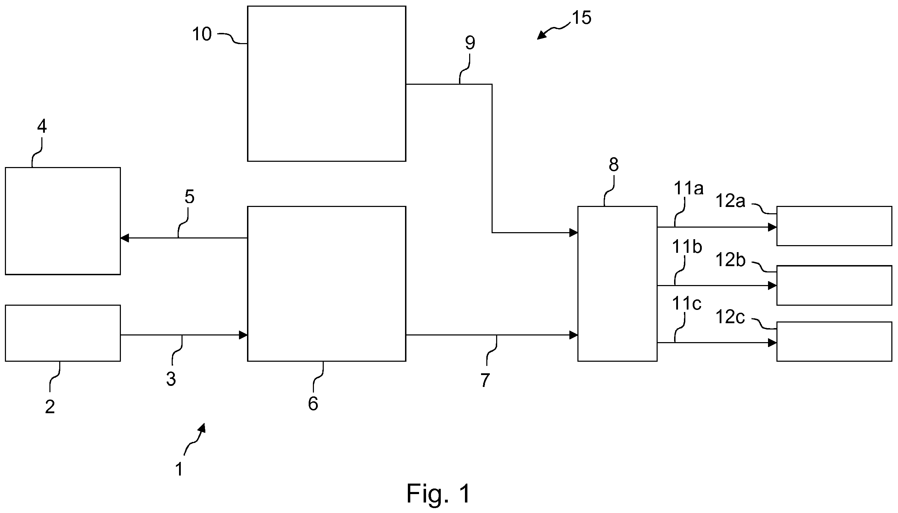

Le système de pilotage 15 représenté sur la figure 1 comporte un dispositif 10 de pilotage automatique de l'aéronef, ainsi qu'un système de commande 1 d'un paramètre de contrôle de l'aéronef. Le système de commande 1 d'un paramètre de contrôle de l'aéronef comprend une interface de commande 2, une unité de contrôle 6 et un dispositif d'affichage 4. L'interface de commande 2 est reliée à l'unité de contrôle 6 par une liaison 3 et l'unité de contrôle 6 est reliée au dispositif d'affichage 4 par une liaison 5. Le dispositif 10 de pilotage automatique et le système de commande 1 d'un paramètre de contrôle sont reliés à une unité 8 de contrôle d'actionneurs par des liaisons respectives 9 et 7. L'unité 8 de contrôle d'actionneurs commande un ensemble d'actionneurs 12a, 12b, 12c par des liaisons respectives 11 a, 11 b et 11 c.

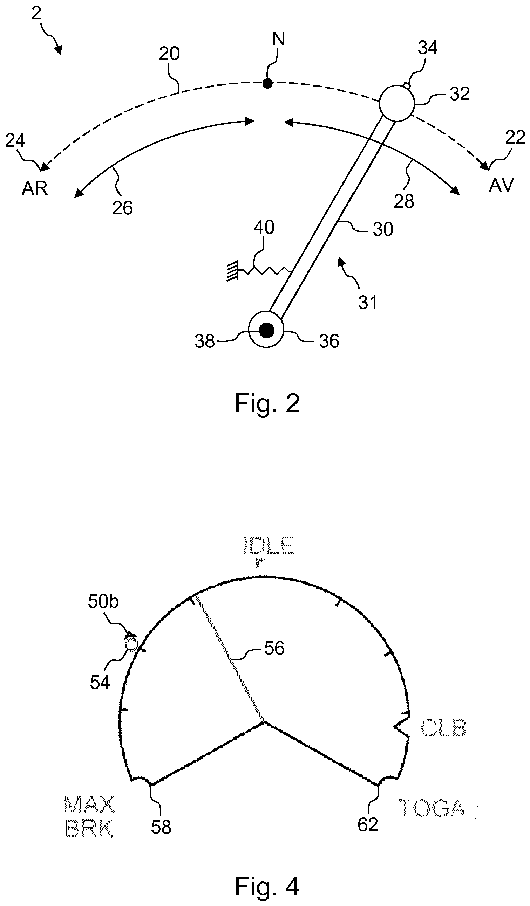

Un exemple de réalisation de l'interface de commande 2 est représenté sur la figure 2. L'interface de commande 2 comporte un élément mobile 31 comportant un levier 30 muni à son extrémité libre d'une poignée 32. Une autre extrémité 36 du levier 30 est mobile en rotation autour d'un axe 38 orthogonal au plan de la figure. Cette rotation permet un mouvement de l'élément mobile, correspondant à une course 20 de la poignée 32 entre une position extrême arrière 24 (AR) et une position extrême avant 22 (AV). Cette course définit deux portions de course 26 et 28 séparées par une position neutre N. Un élément de rappel 40, par exemple un ressort, permet de ramener l'élément mobile 31 à la position neutre N lorsque ledit élément mobile n'est pas actionné. L'élément mobile comporte un élément d'interaction 34, par exemple un bouton poussoir disposé sur la poignée 32.

Le système de commande 1 et le système de pilotage 15 ont pour objet la commande d'un paramètre de contrôle de l'aéronef. Ce paramètre de contrôle peut être homogène à la dérivée de l'énergie de l'aéronef. Il peut aussi correspondre à un angle de roulis, à un angle de tangage, etc. La suite de la description est relative au cas particulier dans lequel le paramètre de contrôle est homogène à la dérivée de l'énergie de l'aéronef. L'homme du métier pourrait sans effort transposer cette description à d'autres paramètres sans sortir du cadre de l'invention. Par énergie de l'aéronef, on entend ici la somme de son énergie cinétique et de son énergie potentielle. L'énergie d'un aéronef peut typiquement être contrôlée en agissant sur la poussée des moteurs et/ou sur la configuration de surfaces de contrôle telles que des aérofreins (« airbrakes » en anglais) lorsque l'aéronef est en vol, ou en agissant sur la poussée des moteurs, les freins, les inverseurs de poussée et/ou des surfaces de contrôle telles que des aérofreins lorsque l'aéronef est au sol.

En l'absence d'action d'un utilisateur sur l'élément mobile 31, cet élément mobile reste dans une position de repos correspondant à la position neutre N. Lorsqu'un utilisateur, en particulier un pilote de l'aéronef, actionne l'élément mobile pour commander une variation de l'énergie de l'aéronef, cela a pour effet de déplacer l'élément mobile selon la course 20. Par exemple, lorsque le pilote souhaite augmenter l'énergie de l'aéronef, il déplace l'élément mobile selon la portion de course 28, à une position située entre la position neutre N et la position extrême avant 22. Lorsque le pilote souhaite diminuer l'énergie de l'aéronef, il déplace l'élément mobile selon la portion de course 26, à une position située entre la position neutre N et la position extrême arrière 24. A une position de l'élément mobile le long de la course 20 correspond une valeur de consigne du paramètre de contrôle.

Les deux portions de course 26 et 28 sont associées à au moins deux combinaisons d'actionneurs agissant sur l'énergie de l'aéronef. Ainsi, à la portion de course 28 est associée une commande de la poussée des moteurs de l'aéronef, ce qui permet d'augmenter l'énergie de l'aéronef. A chaque position de l'élément mobile 31 le long de la portion de course 28 est associée une consigne de poussée des différents moteurs. De même, à la portion de course 26 est associée une commande permettant de diminuer l'énergie de l'aéronef. Lorsque l'aéronef est en vol, cette commande correspond à une commande des aérofreins. Lorsque l'aéronef est au sol, cette commande correspond à une commande des freins des roues de l'aéronef ou à une commande en combinaison des aérofreins et des freins des roues. A chaque position de l'élément mobile 31 le long de la portion de course 26 est associée une consigne relative aux aérofreins et/ou aux freins des roues en fonction de la phase de vol de l'aéronef, notamment selon que l'aéronef est en vol ou au sol.

L'unité de contrôle 6 est configurée pour mémoriser une information correspondant à une première position de l'élément mobile 31 à un instant d'activation de l'élément d'interaction 34. L'unité de contrôle 6 est également configurée pour générer une consigne relative à l'énergie de l'aéronef. Lorsque la position courante de l'élément mobile 31 et la première position sont situées sur la même portion de course 26 ou 28 et cette position courante est plus éloignée de la position neutre N que la première position n'est éloignée de la position neutre N, la consigne est générée par l'unité de contrôle 6 en fonction d'une commande associée à ladite position courante. Sinon, la consigne est générée en fonction d'une commande associée à la première position pour laquelle ladite information a été mémorisée.

De préférence, à l'initialisation du système, l'élément d'interaction 34 n'ayant pas encore été activé par un opérateur de l'aéronef, la première position correspond à la position neutre N.

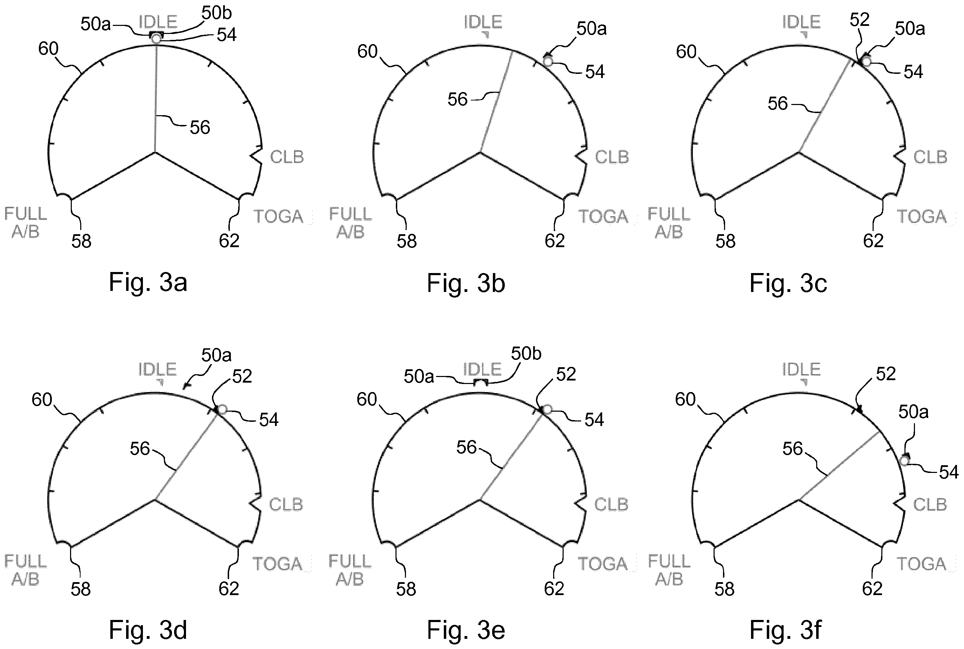

Lorsqu'un pilote souhaite commander une variation de l'énergie de l'aéronef, il manipule l'élément mobile 31 de l'interface de commande 2. Les figures 3a à 3f illustrent des affichages successifs commandés par l'unité de contrôle 6, sur le dispositif d'affichage 4, pour une situation dans laquelle un pilote souhaite augmenter l'énergie de l'aéronef. Comme indiqué précédemment, lorsque le pilote souhaite augmenter l'énergie de l'aéronef, il peut déplacer l'élément mobile 31 selon la portion de course 28, à laquelle est associée une commande de la poussée des moteurs de l'aéronef. La figure 3a illustre le cas dans lequel, en l'absence d'une action du pilote, l'élément mobile est en position de repos sur la position neutre N et dans lequel l'élément d'interaction 34 n'a pas encore été activé. L'affichage représenté sur cette figure comprend une échelle 60 de variation d'énergie de l'aéronef. Cette échelle 60 comporte une valeur notée IDLE correspondant à une valeur de poussée associée au régime de ralenti des moteurs de l'aéronef. La consigne de poussée associée à la position neutre N correspond à cette valeur IDLE. L'affichage comporte également une valeur notée TOGA correspondant à la poussée maximale des moteurs de l'aéronef. Cette valeur TOGA est affichée sensiblement en regard d'une première extrémité 62 de l'échelle 60. L'unité de contrôle 6 commande l'affichage d'une première indication 50a correspondant à la position courante de l'élément mobile. Lorsque l'élément mobile est au repos sur la position neutre N, la première indication 50a est affichée sur l'échelle 60 en regard de ladite valeur IDLE, comme représenté sur la figure 3a. De façon avantageuse, l'unité de contrôle 6 commande en outre l'affichage d'une troisième indication 54 correspondant à une valeur courante du paramètre de contrôle de l'aéronef, en l'occurrence la consigne de poussée des moteurs. L'élément mobile 31 étant sur la position neutre N, cette troisième indication est elle aussi affichée en regard de la valeur IDLE sur l'échelle 60. Avantageusement encore, l'affichage comporte une quatrième indication 56 correspondant à la valeur courante de la poussée des moteurs. Sur la figure 3a, cette quatrième indication est également représentée en regard de la valeur IDLE sur l'échelle 60.

L'affichage commandé par l'unité de contrôle 6 sur le dispositif d'affichage 4 évolue en fonction notamment des déplacements, par le pilote, de l'élément mobile 31 sur la portion de course 28. La figure 3b représente un affichage correspondant à une position de l'élément mobile 31 sur la portion de course 28. Cette position de l'élément mobile sera appelée première position dans la suite de la description. La première indication 50a est alors représentée en regard d'une valeur comprise entre IDLE et TOGA sur l'échelle 60. La troisième indication 54 est elle aussi représentée en regard de cette valeur. En effet, le pilote n'ayant pas encore actionné l'élément d'interaction 34, la consigne de poussée des moteurs est déterminée en fonction d'une commande associée à la position courante de l'élément mobile 31. Etant donné le temps de réaction des moteurs lorsqu'une commande leur est appliquée, la valeur courante de la poussée, représentée par la quatrième indication 56, correspond à une valeur située entre IDLE et ladite valeur associée à la troisième indication 54 sur l'échelle 60. Lorsque le pilote actionne l'élément d'interaction 34 alors que l'élément mobile 31 est sur ladite première position, l'unité de contrôle 6 mémorise une information correspondant à cette première position et commande l'affichage d'une deuxième indication 52 correspondant à cette première position, comme représenté sur la figure 3c. Conformément à la description qui précède, lorsque la position courante de l'élément mobile 31 est située sur la portion de course 28 et cette position courante est plus éloignée de la position neutre N que la première position n'est éloignée de la position neutre N, la consigne est générée par l'unité de contrôle 6 en fonction d'une commande associée à ladite position courante. Sinon, la consigne est générée en fonction d'une commande associée à ladite première position. Ainsi, lorsque le pilote diminue son action sur l'élément mobile 31, celui-ci se rapproche de la position neutre N et la consigne de poussée des moteurs est déterminée en fonction d'une commande associée à ladite première position. L'affichage correspondant est représenté sur la figure 3d. Le pilote peut même relâcher complètement l'élément mobile 31, lequel revient sur la position neutre N sous l'effet de l'élément de rappel 40. La consigne de poussée des moteurs reste inchangée et l'affichage correspondant est représenté sur la figure 3e. Cela permet au pilote de relâcher l'élément mobile 31 une fois qu'il a actionné l'élément d'interaction 34 à la première position correspondant à la consigne souhaitée pour la poussée des moteurs. Lorsque le pilote déplace ensuite l'élément mobile 31, sur la portion de course 28, à une position courante plus éloignée de la position neutre N que la première position n'est éloignée de la position neutre N, la consigne de poussée des moteurs est générée par l'unité de contrôle 6 en fonction d'une commande associée à ladite position courante. L'affichage correspondant est représenté sur la figure 3f. L'affichage de la deuxième indication 52 reste inchangé, tandis que la première indication 50a et la troisième indication 54 sont affichées en regard d'une valeur, sur l'échelle 60, correspondant à la position courante de l'élément mobile 31. Un tel fonctionnement permet au pilote d'augmenter temporairement la poussée des moteurs de l'aéronef. S'il relâche ensuite l'élément mobile 31, l'unité de contrôle 6 ramène la consigne de poussée des moteurs à la valeur correspondant à ladite première position.

Après avoir défini une valeur de la première position en actionnant l'élément d'interaction 34, le pilote peut à tout moment modifier cette valeur en actionnant à nouveau l'élément d'interaction 34. La nouvelle valeur de la première position correspond alors à la position courante de l'élément mobile 31 lorsque le pilote actionne à nouveau l'élément d'interaction 34. Dans le cas particulier où le pilote actionne à nouveau l'élément d'interaction 34 alors que l'élément mobile 31 est sur la position neutre N, la valeur de la première position est réinitialisée, comme lors de l'initialisation du système.

Lorsque le pilote souhaite diminuer l'énergie de l'aéronef, il peut déplacer l'élément mobile 31 selon la portion de course 26, à laquelle est associée une commande permettant de diminuer l'énergie de l'aéronef. Lorsque l'aéronef est en vol, cette commande correspond à une commande des aérofreins. Lorsque l'aéronef est au sol, cette commande correspond à une commande des freins des roues de l'aéronef ou à une commande en combinaison des aérofreins et des freins des roues. L'échelle 60 affichée sur le dispositif d'affichage 4 comporte une deuxième extrémité 58. Lorsque l'aéronef est en vol, l'affichage comporte également une valeur notée FULL A/B comme représenté sur les figures 3a à 3f. Cette valeur FULL A/B, qui est affichée sensiblement en regard de la deuxième extrémité 58 de l'échelle 60, correspond à un déploiement complet des aérofreins et donc à une réduction maximale de l'énergie de l'aéronef.

La figure 4 illustre l'affichage sur le dispositif d'affichage 4 lors d'un freinage, lorsque l'aéronef est au sol. L'affichage comporte une valeur notée MAX BRK, affichée sensiblement en regard de la deuxième extrémité 58 de l'échelle 60. Cette valeur MAX BRK correspond à un freinage maximal de l'aéronef. L'unité de contrôle 6 commande l'affichage d'une première indication 50b correspondant à la position courante de l'élément mobile 31 sur la portion de course 26. Cette première indication 50b est représentée en regard d'une valeur comprise entre IDLE et MAX BRK sur l'échelle 60. L'unité de contrôle 6 commande en outre l'affichage d'une troisième indication 54 correspondant à une valeur courante du paramètre de contrôle de l'aéronef, en l'occurrence une commande des freins des roues de l'aéronef ou une commande en combinaison des aérofreins et des freins des roues. L'affichage représenté sur la figure 4 dans le cas du freinage est similaire à l'affichage représenté sur la figure 3b dans le cas d'une commande de la poussée des moteurs. L'affichage commandé par l'unité de contrôle 6 dans le cas du freinage ne sera pas davantage décrit en détail dans la mesure où il est similaire à l'affichage commandé dans le cas d'une commande de la poussée des moteurs, déjà décrit en référence aux figures 3a à 3f, à ceci près que les différentes indications sont affichées en regard de valeurs comprises entre IDLE et MAX BRK sur l'échelle 60.

Lorsque le pilote active l'élément d'interaction 34, l'information mémorisée correspondant à la première position de l'élément mobile 31 est, selon une première variante, une valeur représentant ladite première position. Cette valeur peut être, par exemple, un pourcentage de la course de l'élément mobile 31 correspondant à cette première position ou un angle correspondant à la déviation de l'élément mobile 31 par rapport à la position neutre N. Dans une deuxième variante, l'information mémorisée est une valeur de consigne du paramètre de contrôle de l'aéronef générée en fonction d'une commande associée à ladite première position de l'élément mobile. Par exemple, lorsque le paramètre de contrôle est homogène à la dérivée de l'énergie de l'aéronef et le pilote souhaite augmenter l'énergie de l'aéronef, l'information mémorisée est une valeur de consigne de poussée des moteurs. Cette valeur peut par exemple être exprimée sous la forme d'un pourcentage sur un intervalle de valeurs de poussée comprises entre les valeurs IDLE et TOGA.

De façon avantageuse, les deux portions de course 26 et 28 sont associées à au moins deux combinaisons d'actionneurs agissant sur le paramètre de contrôle de l'aéronef. Ainsi, lorsque le paramètre de contrôle est homogène à la dérivée de l'énergie de l'aéronef, une première combinaison d'actionneurs comprenant les différents moteurs de l'aéronef est associée à la portion de course 28. Une deuxième combinaison d'actionneurs est associée à la portion de course 26. Cette deuxième combinaison d'actionneurs dépend de la phase de vol de l'aéronef. Lorsque l'aéronef est en vol, elle comprend l'ensemble ou au moins un sous-ensemble des différents aérofreins de l'aéronef. Lorsque l'aéronef est au sol, cette deuxième combinaison comprend l'ensemble ou un sous-ensemble des freins de roues de l'aéronef, ainsi qu'éventuellement l'ensemble ou un sous-ensemble des différents aérofreins de l'aéronef. L'unité de contrôle 6 calcule une consigne à appliquer aux actionneurs de la combinaison d'actionneurs correspondant à la portion de course 26 ou 28 sur laquelle est situé l'élément mobile 31, pour la phase de vol courante de l'aéronef. Cette consigne est calculée par l'unité de contrôle 6 en fonction de la première position de l'élément mobile 31 ou de la position courante de l'élément mobile 31 si celle-ci est plus éloignée de la position neutre N, comme décrit précédemment. Dans un mode de réalisation, la consigne calculée par l'unité de contrôle 6 est une consigne unique appliquée de façon uniforme à chacun des actionneurs de la combinaison considérée. Elle est de préférence exprimée sous la forme d'un pourcentage. Pour cela, l'unité de contrôle 6 détermine une consigne du paramètre de contrôle et calcule un pourcentage que représente cette consigne par rapport à une valeur maximale de consigne pour ce paramètre de contrôle. Par exemple, dans le cas de la poussée des moteurs, cette consigne unique et uniforme pour l'ensemble des moteurs est exprimée sous la forme d'un pourcentage de la poussée maximale TOGA. Dans un autre mode de réalisation, la consigne n'est pas appliquée de façon uniforme sur l'ensemble des actionneurs. Par exemple, l'unité de contrôle 6 utilise une table d'allocation contenant des valeurs de consigne pour chaque actionneur de la combinaison considérée, en fonction soit de la première position ou de la position courante de l'élément mobile 31, soit d'une valeur de consigne du paramètre de contrôle calculée en fonction de la première position ou de la position courante de l'élément mobile 31. Le fait de commander une pluralité d'actionneurs avec une interface de commande 2 unique est avantageux, puisque cela simplifie les tâches de pilotage pour le pilote de l'aéronef : le pilote commande ainsi globalement l'ensemble desdits actionneurs, sans devoir agir sur des interfaces de commande associées à chacun des actionneurs.

Comme indiqué précédemment, outre le système de commande 1 déjà décrit en détail, le système de pilotage 15 représenté sur la figure 1 comporte également un dispositif 10 de pilotage automatique de l'aéronef. Selon le paramètre de contrôle de l'aéronef considéré, ce dispositif de pilotage automatique peut par exemple correspondre à un dispositif de type pilote automatique (« autopilot » en anglais) de l'aéronef ou à un dispositif de commande automatique de la poussée des moteurs de l'aéronef (« autothrust » en anglais). Le système de pilotage 15 peut être configuré selon au moins deux modes. Dans un premier mode, le système de pilotage commande ledit paramètre de contrôle de l'aéronef en fonction de la consigne générée par le système de commande 1. Dans un deuxième mode, le système de pilotage commande ledit paramètre de contrôle de l'aéronef au moins en fonction d'une consigne générée par le dispositif 10 de pilotage automatique. De façon préférée, lorsque ce deuxième mode est activé, le système de pilotage commande le paramètre de contrôle de l'aéronef en fonction de la consigne générée par le système de commande 1 lorsque celle-ci a une amplitude supérieure à l'amplitude de la consigne générée par le dispositif 10 de pilotage automatique et que ces deux consignes sont de même signe. Ce mode de fonctionnement permet au pilote de l'aéronef d'engager ce deuxième mode dans lequel le paramètre de contrôle est commandé de façon automatique, sans action du pilote, par le dispositif 10 de pilotage automatique, tout en conservant une autorité du pilote sur ce dispositif 10 de pilotage automatique. Ainsi, lorsque le deuxième mode est engagé, le pilote peut actionner l'élément mobile 31 de l'interface de commande 2 tout en maintenant ce deuxième mode engagé ; si le pilote déplace suffisamment l'élément mobile 31 de telle façon que la consigne générée par l'unité de contrôle 6 du système de commande 1 est de même signe et d'amplitude supérieure à l'amplitude de la consigne générée par le dispositif 10 de pilotage automatique, alors la consigne envoyée aux actionneurs par le système de pilotage 15 correspond à la consigne générée par l'unité de contrôle 6 du système de commande 1 en fonction des actions du pilote sur l'élément mobile 31. De cette façon, si le pilote estime que l'amplitude de la consigne générée par le dispositif 10 de pilotage automatique est insuffisante, il peut surpasser la commande automatique des actionneurs par le dispositif 10 de pilotage automatique, en commandant une consigne d'amplitude supérieure au moyen de l'élément mobile 31 de l'interface de commande 2. Par exemple, si le pilote estime que la poussée des moteurs commandée automatiquement est insuffisante, il peut commander manuellement, au moyen de l'élément mobile 31 de l'interface de commande 2, une poussée d'amplitude supérieure.

L'élément mobile 31 de l'interface de commande 2 étant ramené automatiquement à la position neutre N lorsque le pilote relâche cet élément mobile, le système de pilotage 15 conforme à l'invention présente l'avantage de ne nécessiter aucune motorisation de l'élément mobile dans le deuxième mode correspondant à un pilotage automatique. En effet, en l'absence d'action du pilote, lors d'un contrôle automatique des actionneurs par le dispositif de pilotage automatique 10, l'élément mobile 31 reste à la position neutre N, de la même façon que dans le premier mode correspondant à un pilotage non automatique. De préférence, lorsque le deuxième mode est activé, la troisième indication 54 correspondant à la valeur courante du paramètre de contrôle de l'aéronef, affichée sur le dispositif d'affichage 4, est affichée en conformité avec la valeur de consigne du paramètre de contrôle réellement appliquée aux actionneurs. Comme indiqué précédemment, cette valeur de consigne peut être fournie par le système de commande 1 ou par le dispositif de pilotage automatique 10. Cette indication visuelle facilite pour le pilote la transition entre le premier et le deuxième mode et réciproquement.

L'unité de contrôle 6, le dispositif 10 de pilotage automatique et l'unité 8 de contrôle des actionneurs sont représentés sur la figure 1 sous la forme de trois entités distinctes. Toutefois, il s'agit d'une représentation fonctionnelle qui n'est nullement limitative des variantes de mise en oeuvre matérielle possibles sans sortir du cadre de l'invention. Ainsi, selon une variante, ces trois entités peuvent être implémentées dans un même calculateur, par exemple un calculateur de contrôle du vol de l'aéronef de type FCS (« Flight Control System » en anglais) ou de type FCGS (« Flight Control and Guidance System » en anglais), ou encore dans un calculateur de contrôle de la poussée des moteurs. Selon une autre variante, ces trois entités peuvent être mises en oeuvre sous la forme de fonctionnalités logicielles supportées par des calculateurs de type avionique modulaire communicant entre eux au moyen d'un réseau de communication avionique, par exemple de type AFDX (« Avionics Full Duplex Switched Ethernet »). L'unité 8 de contrôle des actionneurs peut être commune à plusieurs actionneurs ou il peut être prévu une unité de contrôle pour chacun des actionneurs.

Dans un mode de réalisation particulier, l'élément d'interaction 34 peut être configuré pour bloquer en position l'élément mobile 31 lorsque cet élément d'interaction 34 est activé par le pilote.

## Revendications

1. Système (1) de commande d'un paramètre de contrôle d'un aéronef, ledit système de commande comprenant une interface de commande (2), laquelle comporte :
. un élément mobile (31) configuré pour se déplacer selon une course (60), ladite course définissant au moins deux portions de course (26, 28) séparées par une position neutre (N) ;
. un élément de rappel (40) configuré pour ramener l'élément mobile (31) à ladite position neutre (N) lorsque ledit élément mobile n'est pas actionné ; et
. un élément d'interaction (34),
ledit système de commande (1) comprenant également une unité de contrôle (6) configurée pour :
. mémoriser une information correspondant à une première position de l'élément mobile à un instant d'activation de l'élément d'interaction ; et
. générer une consigne dudit paramètre de contrôle de l'aéronef, **caractérisé en ce que** ladite consigne est générée en fonction d'une commande associée à :
- ladite première position de l'élément mobile pour laquelle ladite information a été mémorisée audit instant d'activation de l'élément d'interaction ; ou
- une position courante de l'élément mobile, lorsque cette position courante et la première position sont situées sur la même portion de course et cette position courante est plus éloignée de la position neutre que la première position n'est éloignée de la position neutre.

2. Système selon la revendication 1, dans lequel ledit paramètre de contrôle est homogène à la dérivée de l'énergie de l'aéronef.

3. Système selon l'une des revendications 1 ou 2, dans lequel lesdites au moins deux portions de course (26, 28) sont associées à au moins deux combinaisons d'actionneurs (12a, 12b, 12c) agissant sur ledit paramètre de contrôle de l'aéronef.

4. Système selon l'une quelconque des revendications précédentes comportant en outre un dispositif d'affichage (4) et dans lequel l'unité de contrôle (6) est configurée pour commander l'affichage, sur ce dispositif d'affichage (4), d'au moins une première indication (50a, 50b) correspondant à la position courante de l'élément mobile et d'une deuxième indication (52) correspondant à la première position de l'élément mobile.

5. Système selon la revendication 4, dans lequel l'unité de contrôle (6) est configurée pour commander, en outre, l'affichage sur le dispositif d'affichage (4) d'une troisième indication (54) correspondant à une valeur courante du paramètre de contrôle de l'aéronef, cette troisième indication étant affichée relativement aux dites première (50a, 50b) et deuxième (52) indications.

6. Système selon l'une quelconque des revendications précédentes, dans lequel l'information mémorisée correspondant à la première position de l'élément mobile (31) à un instant d'activation de l'élément d'interaction est :
- une valeur représentant ladite première position ; ou
- une valeur de consigne du paramètre de contrôle de l'aéronef générée en fonction d'une commande associée à ladite première position de l'élément mobile.

7. Système selon l'une quelconque des revendications précédentes, dans lequel l'élément d'interaction (34) peut en outre être configuré pour bloquer en position l'élément mobile (31).

8. Système de pilotage (15) d'un aéronef comportant un dispositif (10) de pilotage automatique de l'aéronef ainsi qu'un système (1) de commande selon l'une quelconque des revendications précédentes, ledit système de pilotage pouvant être configuré au moins selon :
- un premier mode dans lequel le système de pilotage (15) commande ledit paramètre de contrôle de l'aéronef en fonction de la consigne générée par le système (1) de commande ; et
- un deuxième mode dans lequel le système de pilotage (15) commande ledit paramètre de contrôle de l'aéronef au moins en fonction d'une consigne générée par le dispositif (10) de pilotage automatique.

9. Système de pilotage selon la revendication 8 dans lequel, lorsque le deuxième mode est activé, le système de pilotage (15) commande le paramètre de contrôle de l'aéronef en fonction de la consigne générée par le système (1) de commande lorsque celle-ci a une amplitude supérieure à l'amplitude de la consigne générée par le dispositif (10) de pilotage automatique et que ces deux consignes sont de même signe.

10. Aéronef comportant un système de commande (1) selon l'une quelconque des revendications 1 à 7.

11. Aéronef comportant un système de pilotage (15) selon l'une des revendications 8 ou 9.

12. Procédé de commande d'un paramètre d'un aéronef, comportant une étape de détermination d'une position courante d'un élément mobile (31) d'une interface de commande (2), ledit élément mobile étant configuré pour se déplacer selon une course (60), ladite course définissant au moins deux portions de course (26, 28) séparées par une position neutre (N) et l'élément mobile (31) étant ramené à ladite position neutre par un élément de rappel (40) lorsqu'il n'est pas actionné, le procédé comportant en outre les étapes suivantes :
- mémorisation, par une unité de contrôle (6), d'une information correspondant à une première position de l'élément mobile lors de l'activation d'un élément d'interaction (34) de l'interface de commande (2) ;
- génération, par l'unité de contrôle (6), d'une consigne dudit paramètre de contrôle de l'aéronef,
**caractérisé en ce que** ladite consigne est générée en fonction d'une commande associée :
. à ladite première position de l'élément mobile pour laquelle ladite information a été mémorisée lors de l'activation de l'élément d'interaction ; ou
. à une position courante de l'élément mobile, lorsque cette position courante et la première position sont situées sur la même portion de course (26, 28) et cette position courante est plus éloignée de la position neutre (N) que la première position n'est éloignée de la position neutre.

13. Procédé selon la revendication 12 dans lequel ledit paramètre de contrôle est homogène à la dérivée de l'énergie de l'aéronef et lesdites au moins deux portions de course sont associées à au moins deux combinaisons d'actionneurs agissant sur l'énergie de l'aéronef.

14. Procédé selon l'une des revendications 12 ou 13 dans lequel l'unité de contrôle (6) est configurée pour commander l'affichage, sur un dispositif d'affichage (4), d'au moins une première indication (50a, 50b) correspondant à la position courante de l'élément mobile et d'une deuxième indication (52) correspondant à la première position de l'élément mobile.

15. Procédé selon la revendication 14, dans lequel l'unité de contrôle est configurée pour commander, en outre, l'affichage sur le dispositif d'affichage (4) d'une troisième indication (54) correspondant à une valeur courante du paramètre de contrôle de l'aéronef, cette troisième indication étant affichée relativement aux dites première et deuxième indications (50a, 50b, 52).

16. Procédé de pilotage d'un aéronef, ledit aéronef comportant un dispositif (15) de pilotage automatique ainsi qu'un système (1) de commande selon l'une quelconque des revendications 1 à 7, ledit système de pilotage pouvant être configuré au moins selon :
- un premier mode dans lequel le système de pilotage commande ledit paramètre de contrôle de l'aéronef en fonction de la consigne générée par le système de commande (1) ; et
- un deuxième mode dans lequel le système de pilotage commande ledit paramètre de contrôle de l'aéronef au moins en fonction d'une consigne générée par le dispositif (10) de pilotage automatique,
ledit procédé comportant les étapes suivantes lorsque le deuxième mode du système de pilotage est activé :
- génération, par le système de commande, d'une consigne de commande du paramètre de contrôle de l'aéronef, conformément au procédé selon l'une des revendications 11 à 13 ;
- commande, par le système de pilotage (15), du paramètre de contrôle de l'aéronef en fonction :
. de la consigne générée par le système (1) de commande lorsque celle-ci a une amplitude supérieure à l'amplitude de la consigne générée par le dispositif (10) de pilotage automatique et que ces deux consignes sont de même signe ; ou
. de la consigne générée par le dispositif (10) de pilotage automatique dans les autres cas.

17. Programme d'ordinateur comportant des instructions pour la mise en oeuvre d'un procédé selon l'une des revendications 12 à 16 lorsque ledit programme est exécuté sur un ordinateur.

## Patentansprüche

1. Kontrollsystem (1) eines Steuerparameters eines Luftfahrzeugs, wobei das Kontrollsystem eine Kontrollschnittstelle (2) umfasst, die Folgendes umfasst:
• ein bewegliches Element (31), das konfiguriert ist, um sich entlang einem Hub (60) zu bewegen, wobei der Hub mindestens zwei Hubabschnitte (26, 28) definiert, die durch eine neutrale Position (N) getrennt sind,
• ein Rückstellelement (40), das konfiguriert ist, um das bewegliche Element (31) zu der neutralen Position (N) zurückzustellen, wenn das bewegliche Element nicht betätigt wird, und
• ein Interaktionselement (34),
wobei das Kontrollsystem (1) auch eine Steuereinheit (6) umfasst, die konfiguriert ist, um:
• eine Information zu speichern, die einer ersten Position des beweglichen Elements in einem Aktivierungsaugenblick des Interaktionselements entspricht, und
• einen Sollwert des Steuerparameters des Luftfahrzeugs zu erzeugen, **dadurch gekennzeichnet, dass** der Sollwert in Abhängigkeit von einem Befehl erzeugt wird, der zusammenhängt mit:
- der ersten Position des beweglichen Elements, für die die Information im Aktivierungsaugenblick des Interaktionselements gespeichert wurde, oder
- einer aktuellen Position des beweglichen Elements, wenn diese aktuelle Position und die erste Position auf demselben Hubabschnitt liegen und diese aktuelle Position von der neutralen Position weiter entfernt ist als die erste Position von der neutralen Position entfernt ist.

2. System nach Anspruch 1, wobei der Steuerparameter zu der Ableitung der Energie des Luftfahrzeugs homogen ist.

3. System nach einem der Ansprüche 1 oder 2, wobei die mindestens zwei Hubabschnitte (26, 28) mit mindestens zwei Kombinationen von Aktuatoren (12a, 12b, 12c), die auf den Steuerparameter des Luftfahrzeugs einwirken, verbunden sind.

4. System nach einem der vorhergehenden Ansprüche, das außerdem eine Anzeigevorrichtung (4) umfasst, und wobei die Steuereinheit (6) konfiguriert ist, um auf dieser Anzeigevorrichtung (4) das Anzeigen mindestens einer ersten Angabe (50a, 50b), die der aktuellen Position des beweglichen Elements entspricht, und einer zweiten Angabe (52), die der ersten Position des beweglichen Elements entspricht, zu kontrollieren.

5. System nach Anspruch 4, wobei die Steuereinheit (6) konfiguriert ist, um außerdem das Anzeigen auf der Anzeigevorrichtung (4) einer dritten Angabe (54) zu kontrollieren, die einem aktuellen Wert des Steuerparameters des Luftfahrzeugs entspricht, wobei diese dritte Angabe in Bezug zu der ersten (50a, 50b) und der zweiten (52) Angabe angezeigt wird.

6. System nach einem der vorhergehenden Ansprüche, wobei die gespeicherte Information, die der ersten Position des beweglichen Elements (31) in einem Aktivierungsaugenblick des Interaktionselements entspricht:
- ein Wert ist, der die erste Position darstellt, oder
- ein Sollwert des Steuerparameters des Luftfahrzeugs ist, der in Abhängigkeit von einem Befehl, der mit der ersten Position des beweglichen Elements zusammenhängt, erzeugt wird.

7. System nach einem der vorhergehenden Ansprüche, wobei das Interaktionselement (34) außerdem konfiguriert sein kann, um das bewegliche Element (31) in Position zu blockieren.

8. Lenksystem (15) eines Luftfahrzeugs, das eine Vorrichtung (10) zum automatischen Lenken des Luftfahrzeugs sowie ein Kontrollsystem (1) nach einem der vorhergehenden Ansprüche umfasst, wobei das Lenksystem mindestens gemäß Folgendem konfiguriert sein kann:
- einem ersten Modus, in dem das Lenksystem (15) den Steuerparameter des Luftfahrzeugs in Abhängigkeit von dem Sollwert kontrolliert, der von dem Kontrollsystem (1) erzeugt wird, und
- einem zweiten Modus, in dem das Lenksystem (15) den Steuerparameter des Luftfahrzeugs mindestens in Abhängigkeit von einem Sollwert kontrolliert, der von der automatischen Lenkvorrichtung (10) erzeugt wird.

9. Lenksystem nach dem Anspruch 8, wobei, wenn der zweite Modus aktiviert ist, das Lenksystem (15) den Steuerparameter des Luftfahrzeugs in Abhängigkeit von dem Sollwert kontrolliert, der von dem Kontrollsystem (1) erzeugt wird, wenn dieser eine Amplitude größer als die Amplitude des Sollwerts hat, der von der automatischen Lenkvorrichtung (10) erzeugt wird, und diese zwei Sollwerte dasselbe Vorzeichen haben.

10. Luftfahrzeug, das ein Kontrollsystem (1) nach einem der Ansprüche 1 bis 7 umfasst.

11. Luftfahrzeug, das ein Lenksystem (15) nach einem der Ansprüche 8 oder 9 umfasst.

12. Kontrollverfahren eines Parameters eines Luftfahrzeugs, das einen Schritt des Bestimmens einer aktuellen Position eines beweglichen Elements (31) einer Kontrollschnittstelle (2) umfasst, wobei das bewegliche Element konfiguriert ist, um sich entlang einem Hub (60) zu bewegen, wobei der Hub mindestens zwei Hubabschnitte (26, 28) definiert, die durch eine neutrale Position (N) getrennt sind und das bewegliche Element (31) zu der neutralen Position von einem Rückstellelement (40) zurückgestellt wird, wenn es nicht betätigt wird, wobei das Verfahren ferner die folgenden Schritte umfasst:
- Speichern durch eine Steuereinheit (6) einer Information, die einer ersten Position des beweglichen Elements bei dem Aktivieren eines Interaktionselements (34) der Kontrollschnittstelle (2) entspricht,
- Erzeugen durch die Steuereinheit (6) eines Sollwerts des Steuerparameters des Luftfahrzeugs,
**dadurch gekennzeichnet, dass** der Sollwert in Abhängigkeit von einem Befehl erzeugt wird, der zusammenhängt mit:
• der ersten Position des beweglichen Elements, für die die Information bei dem Aktivieren des Interaktionselements gespeichert wurde, oder
• einer aktuellen Position des beweglichen Elements, wenn diese aktuelle Position und die erste Position auf demselben Hubabschnitt (26, 28) liegen und diese aktuelle Position von der neutralen Position (N) weiter entfernt ist als die erste Position von der neutralen Position entfernt ist.

13. Verfahren nach Anspruch 12, wobei der Steuerparameter zu der Ableitung der Energie des Luftfahrzeugs homogen ist und die mindestens zwei Hubabschnitte mit mindestens zwei Kombinationen von Aktuatoren, die auf die Energie des Luftfahrzeugs einwirken, verbunden sind.

14. Verfahren nach einem der Ansprüche 12 oder 13, wobei die Steuereinheit (6) konfiguriert ist, um das Anzeigen auf einer Anzeigevorrichtung (4) mindestens einer ersten Angabe (50a, 50b), die der aktuellen Position des beweglichen Elements entspricht, und einer zweiten Angabe (52), die der ersten Position des beweglichen Elements entspricht, zu kontrollieren.

15. Verfahren nach Anspruch 14, wobei die Steuereinheit konfiguriert ist, um außerdem das Anzeigen auf der Anzeigevorrichtung (4) einer dritten Angabe (54), die einem aktuellen Wert des Steuerparameters des Luftfahrzeugs entspricht, zu kontrollieren, wobei diese dritte Angabe in Bezug auf die erste und zweite Angabe (50a, 50b, 52) angezeigt wird.

16. Verfahren zum Lenken eines Luftfahrzeugs, wobei das Luftfahrzeug eine automatische Lenkvorrichtung (15) sowie ein Kontrollsystem (1) nach einem der Ansprüche 1 bis 7 umfasst, wobei das Lenksystem mindestens gemäß Folgendem konfiguriert sein kann:
- einem ersten Modus, in dem das Lenksystem den Steuerparameter des Luftfahrzeugs in Abhängigkeit von dem Sollwert kontrolliert, der von dem Kontrollsystem (1) erzeugt wird, und
- einem zweiten Modus, in dem das Lenksystem den Steuerparameter des Luftfahrzeugs mindestens in Abhängigkeit von einem Sollwert kontrolliert, der von der automatischen Lenkvorrichtung (10) erzeugt wird,
wobei das Verfahren folgende Schritte umfasst, wenn der zweite Modus des Lenksystems aktiviert ist:
- Erzeugen durch das Kontrollsystem eines Kontrollsollwerts des Steuerparameters des Luftfahrzeugs gemäß dem Verfahren nach einem der Ansprüche 11 bis 13,
- Kontrollieren durch das Lenksystem (15) des Steuerparameters des Luftfahrzeugs in Abhängigkeit von:
• dem Sollwert, der von dem Kontrollsystem (1) erzeugt wird, wenn dieser eine Amplitude hat, die größer ist als die Amplitude des Sollwerts, der von der automatischen Lenkvorrichtung (10) erzeugt wird, und diese zwei Sollwerte das gleiche Vorzeichen haben, oder
• in den anderen Fällen dem Sollwert, der von der automatischen Lenkvorrichtung (10) erzeugt wird.

17. Computerprogramm, das Anweisungen für das Umsetzen eines Verfahrens nach einem der Ansprüche 12 bis 16, wenn das Programm auf einem Computer ausgeführt wird, umfasst.

## Claims

1. System (1) for controlling an aircraft control parameter, said control system comprising a control interface (2), which includes:
- a mobile element (31) configured to move on a travel (60), said travel defining at least two portions of travel (26, 28) separated by a neutral position (N);
- a return element (40) configured to bring the mobile element (31) back to said neutral position (N) when said mobile element is not actuated; and
- an interaction element (34),
said control system (1) also comprising a control unit (6) configured to:
- memorize an item of information corresponding to a first position of the mobile element at an instant of activation of the interaction element; and
- generate a setpoint of said aircraft control parameter,
**characterized in that** said setpoint is generated as a function of a control associated with:
• said first position of the mobile element for which said information has been memorized at said instant of activation of the interaction element; or
• a current position of the mobile element, when this current position and the first position are situated on the same portion of travel and this current position is more remote from the neutral position than the first position is remote from the neutral position.

2. System according to Claim 1, wherein said control parameter is consistent with the derivative of the aircraft energy.

3. System according to either of Claims 1 and 2, wherein said at least two portions of travel (26, 28) are associated with at least two combinations of actuators (12a, 12b, 12c) acting on said aircraft control parameter.

4. System according to any one of the preceding claims, furthermore comprising a display device (4) and wherein the control unit (6) is configured to control the display, on this display device (4), of at least a first indication (50a, 50b) corresponding to the current position of the mobile element and of a second indication (52) corresponding to the first position of the mobile element.

5. System according to Claim 4, wherein the control unit (6) is configured to control, furthermore, the display on the display device (4) of a third indication (54) corresponding to a current value of the aircraft control parameter, this third indication being displayed relative to said first (50a, 50b) and second (52) indications.

6. System according to any one of the preceding claims, wherein the memorized information corresponding to the first position of the mobile element (31) at an instant of activation of the interaction element is:
- a value representing said first position; or
- a setpoint value of the aircraft control parameter generated as a function of a control associated with said first position of the mobile element.

7. System according to any one of the preceding claims, wherein the interaction element (34) can furthermore be configured to block the mobile element (31) in position.

8. Aircraft piloting system (15) including an aircraft autopilot device (10) as well as a control system (1) according to any one of the preceding claims, said piloting system being able to be configured at least according to:
- a first mode in which the piloting system (15) controls said aircraft control parameter as a function of the setpoint generated by the control system (1); and
- a second mode in which the piloting system (15) controls said aircraft control parameter at least as a function of a setpoint generated by the autopilot device (10).

9. Piloting system according to Claim 8, wherein when the second mode is activated, the piloting system (15) controls the aircraft control parameter as a function of the setpoint generated by the control system (1) when the setpoint has an amplitude greater than the amplitude of the setpoint generated by the autopilot device (10) and when these two setpoints are of the same sign.

10. Aircraft including a control system (1) according to any one of Claims 1 to 7.

11. Aircraft including a piloting system (15) according to either of Claims 8 and 9.

12. Method for controlling a parameter of an aircraft, including a step of determining a current position of a mobile element (31) of a control interface (2), said mobile element being configured to move on a travel (60), said travel defining at least two portions of travel (26, 28) separated by a neutral position (N) and the mobile element (31) being brought back to said neutral position by a return element (40) when it is not actuated, the method furthermore including the following steps:
- memorization, by a control unit (6), of an item of information corresponding to a first position of the mobile element on activation of an interaction element (34) of the control interface (2);
- generation, by the control unit (6), of a setpoint of said aircraft control parameter,
**characterized in that** said setpoint is generated as a function of a control associated:
• with said first position of the mobile element for which said information has been memorized upon activation of the interaction element; or
• with a current position of the mobile element, when this current position and the first position are situated on the same portion of travel (26, 28) and this current position is more remote from the neutral position (N) than the first position is remote from the neutral position.

13. Method according to Claim 12, wherein said control parameter is consistent with the derivative of the aircraft energy and said at least two portions of travel are associated with at least two combinations of actuators acting on the aircraft energy.

14. Method according to either of Claims 12 and 13, wherein the control unit (6) is configured to control the display, on a display device (4), of at least a first indication (50a, 50b) corresponding to the current position of the mobile element and of a second indication (52) corresponding to the first position of the mobile element.

15. Method according to Claim 14, wherein the control unit is configured to control, furthermore, the display on the display device (4) of a third indication (54) corresponding to a current value of the aircraft control parameter, this third indication being displayed relative to said first and second indications (50a, 50b, 52).

16. Method for piloting an aircraft, said aircraft including an autopilot device (15) as well as a control system (1) according to any one of Claims 1 to 7, said piloting system being able to be configured at least in:
- a first mode in which the piloting system controls said aircraft control parameter as a function of the setpoint generated by the control system (1) ; and
- a second mode in which the piloting system controls said aircraft control parameter at least as a function of a setpoint generated by the autopilot device (10),
said method including the following steps when the second mode of the piloting system is activated:
- generation, by the control system, of a control setpoint of the aircraft control parameter, in accordance with the method according to one of Claims 11 to 13;
- control, by the piloting system (15), of the aircraft control parameter as a function;
• of the setpoint generated by the control system (1) when the setpoint has an amplitude greater than the amplitude of the setpoint generated by the autopilot device (10) and when these two setpoints are of the same sign; or
• of the setpoint generated by the autopilot device (10) in the other cases.

17. Computer program including instructions for the implementation of a method according to one of Claims 12 to 16 when said program is executed on a computer.
